Europäisches Patentamt

European Patent Office

Office européen des brevets

(11) Veröffentlichungsnummer: **0 332 731**
**A1**

## EUROPÄISCHE PATENTANMELDUNG

(21) Anmeldenummer: **88104315.2**

(22) Anmeldetag: **18.03.88**

(51) Int. Cl.⁴: **A47J 31/06 , A47J 31/02**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **Woltermann, Erich H.**
**Ameisenweg 3**
**D-4950 Minden(DE)**

(72) Erfinder: **Woltermann, Erich H.**
**Ameisenweg 3**
**D-4950 Minden(DE)**

(74) Vertreter: **Patentanwälte Dr. Solf & Zapf**
**Schlossbleiche 20 Postfach 13 01 13**
**D-5600 Wuppertal 1(DE)**

(54) **Verfahren und Filter zum Aufbrühen von Tee.**

(57) Die Erfindung betrifft ein Verfahren zum Aufbrühen von Tee aus Teeblättern oder dergleichen, wobei kochendheißes Wasser auf die in einem Aufgußfilter eingefüllten Teeblätter gegossen wird und das hineingegossene Wasser aus dem Aufgußfilter unter Durchfluß durch die Teeblätter ausläuft und aufgefangen wird. Erfindungsgemäß wird eine genau dosierte Wassermenge entsprechend mindestens dem Volumen einer Teetasse in den Aufgußfilter mit einem konstanten Dosiervolumen eingegossen und während der anfänglichen Einlaufphase zunächst das Wasser im Filter solange aufgestaut, indem das Wasserzulaufvolumen pro Zeiteinheit größer ist als das Wasserablaufvolumen pro Zeiteinheit, bis das Wasser eine derartige statische Höhe erreicht hat, daß das Wasserzulaufvolumen pro Zeiteinheit gleich dem Wasserablaufvolumen pro Zeiteinheit ist. Dabei werden das Wasserzulaufvolumen pro Zeiteinheit und das Wasserablaufvolumen pro Zeiteinheit derart gewählt, daß eine gesamte Aufgußzeit von 3 bis 5 Minuten erreicht wird. Ferner betrifft die Erfindung auch einen Teefilter mit einem aus Kunststoff bestehenden, becherförmigen Tiefziehteil (1), in dessen Boden mindestens eine mittige Auslauföffnung (4) ausgebildet ist, deren Größe derart bemessen ist, daß in Abhängigkeit von dem höchsten Füllstand im Behältnis und der einfließenden, dosierten Wassermenge eine Aufgußzeit von 3 bis 5 Minuten gegeben ist.

FIG.1

## Verfahren und Filter zum Aufbrühen von Tee

Die vorliegende Erfindung betrifft ein Verfahren zum Aufbrühen von Tee aus Teeblättern oder dergleichen, wobei kochendheißes Wasser auf die in einem Aufgußfilter eingefüllten Teeblätter gegossen wird und das eingegossene Wasser aus dem Aufgußfilter unter Durchfluß durch die Teeblätter ausläuft und aufgefangen wird.

Weiterhin bezieht sich die Erfindung auf einen Teefilter zum Durchführen des vorgenannten Verfahrens.

Das Aufbrühen von portionierten Teeportionen erfolgt im überwiegenden Maße mittels mit Teeblättern gefüllter, wasserdurchlässiger Teebeutel oder sogenannter "Tee-Eier", in denen eine bestimmte Menge Teeblätter entsprechend der gewünschten Teemenge enthalten ist. Diese Teebeutel oder "Tee-Eier" werden in die Teekanne oder -tasse gelegt und mit der jeweiligen Menge Wasser übergossen. Nach dem Übergießen werden die Teebeutel oder "Tee-Eier" für eine Verweilzeit von 3 bis 5 Minuten im eingefüllten Wasservolumen belassen, so daß der Tee ziehen kann, und danach werden diese herausgenommen. Dieses Verfahren ist zwar sehr verbreitet, und die Teebeutel lassen sich auch industriell fertigen und ermöglichen eine leichte, portionierte Bevorratung, jedoch ist die Tee-Ausbeute und das erzielbare Tee-Aroma nicht zufriedenstellend. Demnach ist das erzielbare Ergebnis nicht vergleichbar mit dem Aufbrühen von Tee von Hand, wobei die losen Teeblätter in eine Teekanne oder in einen Tee-Einsatz eingegeben werden und danach mit kochendheißem Wasser übergossen werden, so daß sie frei aufquellen können.

Der Erfindung liegt die Aufgabe zugrunde, ein Verfahren zum Aufbrühen von Tee zu schaffen, daß in Verbindung mit portioniert abgepackten Teeblättern verwendet werden kann, und zwar unter Erhalt einer guten Ausbeute und einem wesentlich verbesserten Tee-Aroma. Weiterhin ist es Aufgabe der Erfindung, einen hierzu geeigneten Teefilter zu schaffen.

Erfindungsgemäß wird dies mit einem Verfahren erreicht, bei dem eine genau dosierte Wassermenge, entsprechend mindestens dem Volumen einer Teetasse, in den Aufgußfilter mit einem konstanten Dosiervolumen eingegossen wird und während der anfänglichen Eingießphase zunächst das Wasser im Filter solange aufgestaut wird, in dem das Wasserzulaufvolumen pro Zeiteinheit größer ist als das Wasserablaufvolumen pro Zeiteinheit, bis das Wasser eine derartige statische Höhe im Filter erreicht hat, daß das Wasserzulaufvolumen pro Zeiteinheit gleich dem Wasserablaufvolumen pro Zeiteinheit ist sowie das Wasserzulaufvolumen pro Zeiteinheit und das Wasserablaufvolumen pro Zeiteinheit derart gewählt sind, daß eine gesamte Aufgußzeit von 3 bis 5 Minuten erreicht wird. Erfindungsgemäß wird demnach ein definierter Stau im Teefilter erzielt, so daß die Teeblätter sich ständig im Wasser befinden und somit eine gewisse Verweildauer der Teeblätter im Wasser gewährleistet ist. Dabei ist es weiterhin wichtig, daß ein Durchlauf durch die Teeblätter stattfindet, so daß sich eine Konzentrationsveränderung innerhalb des Filterbehältnisses einstellt, die für eine gute Auswertung des Tees erforderlich ist. Hierbei ist es weiterhin wesentlich, daß das Eingießen des kochendheißen Wassers nicht in einem einzigen Aufgußschwall, erfolgt, sondern daß die Zugabe über einen gewissen Zeitraum dosiert erfolgt, wodurch nach dem Aufstauen des Wassers im Filter selbst ein konstanter Zu- und Ablauf gegeben ist.

Zur Durchführung des erfindungsgemäßen Verfahrens dient zweckmäßigerweise ein Teefilterbehältnis, gekennzeichnet durch ein aus Kunststoff bestehendes, becherförmiges Tiefziehteil, in dessen Boden mindestens eine mittige Auslauföffnung ausgebildet ist, deren Größe derart ist, daß in Abhängigkeit von dem höchsten Füllstand im Filter und der einzugießenden Wassermenge eine Aufgußzeit von 3 bis 5 Minuten gegeben ist.

Vorteilhafte Ausführungen der Erfindung sind in den Unteransprüchen 2 bzw. 4 bis 7 enthalten.

Anhand des in den beiliegenden Zeichnungen dargestellten Ausführungsbeispiels wird die Erfindung nunmehr näher erläutert. Es zeigen:

Fig. 1 eine Seitenansicht eines erfindungsgemäßen Teefilterbehältnisses,

Fig. 2 eine Aufsicht von oben auf das geöffnete Teefilterbehältnis in Pfeilrichtung II gemäß Fig. 1,

Fig. 3 einen Schnitt entlang der Schnittlinie III-III in Fig. 2.

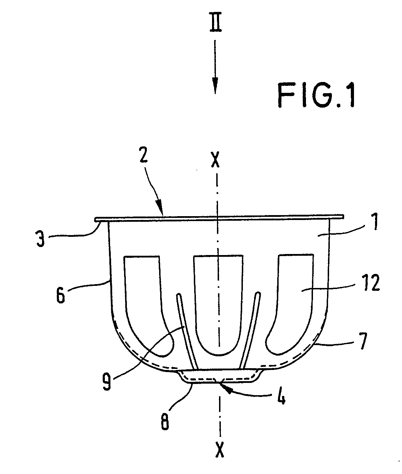

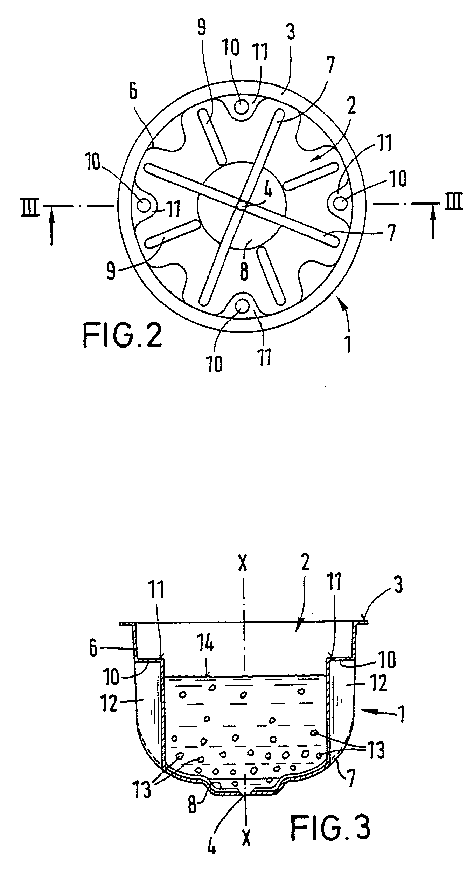

Wie sich aus Fig. 1 und 2 ergibt, besteht ein erfindungsgemäßer Teefilter aus einem aus Kunststoff bestehenden Tiefziehteil 1, das als Becher ausgebildet ist und eine kreisförmige Einfüllöffnung 2 aufweist. Als Herstellungsmaterial wird Polystyrol verwendet, wobei eine auf der Becherinnenseite ausgebildete Polyethylen-Beschichtung vorgesehen ist. Hierdurch wird eine Geschmacksneutralität erreicht. Das Becherbehältnis 1 weist einen die Einfüllöffnung 2 umfassenden, äußeren Rand 3 auf, der etwa senkrecht zur Behältnisachse X-X verläuft. Weiterhin weist das Becherbehältnis 1 eine Auslauföffnung 4 auf, die konzentrisch zur Einlauföffnung 2 angeordnet ist und durch deren Mittelpunkt die Achse X-X verläuft. Das abgebildete Filterbehältnis ist derart ausgebildet, daß es zum Aufbrühen von ca. 250 bis 270 ml Tee ausreicht. Die Größe der Auslauföffnung 4 ist derart dimensioniert, daß in Abhängigkeit von dem höchsten Füllstand des einzugießenden Wassers im Filter und in Abhängigkeit von der einzugießenden Wassermenge eine Gesamtaufgußzeit von ca. 3 bis 5 Minuten gegeben ist. D. h., innerhalb von 3 bis 5 Minuten ist beispielsweise die Wassermenge von 250 bis 270 ml durch das erfindungsgemäße Filterbehältnis hindurchgelaufen. Der maximale Füllstand im erfindungsgemäßen Behältnis ist derart berechnet, und hieraus resultiert auch die Dimensionierung des erfindungsgemäßen Filterbehältnisses 1, daß beim Erreichen des maximalen Füllstandes das in das erfindungsgemäße Filterbehältnis einfließende Wasservolumen pro Zeiteinheit gleich dem durch die Auslauföffnung 4 herauslaufenden Wasservolumen pro Zeiteinheit ist.

Wie sich weiterhin insbesondere aus Fig. 2 ergibt, sind in der Wandung 6 des Filterbehältnisses 1, ausgehend von der Auslauföffnung 4, radial verlaufende, sich nach oben hin zur Einfüllöffnung 2 erstreckende Rinnen 7 ausgebildet. Diese Rinnen 7 sind zur Innenseite des Filterbehältnisses 1 hin offen ausgebildet. Diese Rinnen dienen einerseits dazu, die Teeflüssigkeit zur Auslauföffnung 4 hinzuleiten, und andererseits wird hierdurch eine Versteifung des Stützbehältnisses 1 bewirkt. Weiterhin ist zu erkennen, daß die Auslauföffnung 4 sich innerhalb einer kreisförmigen, konzentrischen Vertiefung 8 befindet. Hierbei können zusätzliche Rinnen 9 vorgesehen sein, die zwischen den Rinnen 7 angeordnet sind und sich vom Rand der Vertiefung 8 nach oben erstrecken. Weiter sind erfindungsgemäß in der Wandung des Filterbehältnisses 1 Überlauföffnungen 10 ausgebildet. Im dargestellten Ausführungsbeispiel sind vier jeweils um 90° gegeneinander versetzte Überlauföffnungen 10 vorhanden. Durch diese Überlauföffnungen 10 wird die maximale Füllstandshöhe definiert. Diese Überlauföffnungen 10 sind deshalb vorgesehen, um ein Überlaufen des Wassers über den Rand des Filterbehältnisses zu verhindern. Ein derartiges Überlaufen könnte beispielsweise dann auftreten, wenn die relativ kleine Auslauföffnung 4 durch Teeblätter verstopft sein sollte. Wie weiterhin zu erkennen ist, sind die Überlauföffnungen 10 in einer zur Öffnungsebene der Einlauföffnung 2 parallelen Ebene ausgebildet, weshalb innerhalb des Behältnisses 1 in den Innenraum hineinragende Absätze 11 ausgebildet sind, so daß sich in der Außenseite des Filterbehältnisses 1 Einbuchtungen 12 ergeben, die zur Führung des eventuell auslaufenden Wassers dienen und sich bis in den Bodenbereich des Behältnisses 1 erstrecken.

Das erfindungsgemäße Filterbehältnis wird mit den darin befindlichen, portionierten Teeblättern 13 (Fig. 3) in einem schutzgasbegasten, gasdichten Behältnis aufbewahrt, das aus einem becherförmigen Kunststoff-Folientiefziehteil besteht, dessen Öffnung durch eine abziehbare Folie verschlossen ist.

Die Funktionsweise des erfindungsgemäßen Teefilters ist nun wie folgt. Nach dem Herausnehmen aus dem Aufbewahrungsbehältnis wird der Filter mit den in ihm befindlichen Teeblättern 13 in eine geeignete Maschine eingesetzt. Mittels dieser Maschine wird über die Einlauföffnung 2 in einem bestimmten Dosiervolumen, d. h. einer bestimmtem Einfüllmenge pro Zeiteinheit, Wasser im kochendheißen Zustand bei etwa 98° C von oben eingefüllt. Da die anfänglich einlaufende Volumenmenge pro Zeiteinheit größer ist als die durch die Auslauföffnung 4 auslaufende Flüssigkeitsmenge, entsteht innerhalb des erfindungsgemäßen Behältnisses ein Wasserstau, so daß der Füllstand 14 (siehe Fig. 3) im Behältnis bis zum maximalen Füllstand ansteigt. Ist dieser maximale Füllstand erreicht, so ist, bedingt durch die dadurch erreichte, statische Höhe, der wirksame Druck derart, daß die Auslaufmenge pro Zeiteinheit gleich der Einlaufmenge pro Zeiteinheit ist, so daß ein weiteres Ansteigen der Flüssigkeitsmenge im Filterbehältnis nicht mehr erfolgt. Erfindungsgemäß ist dabei die pro Zeiteinheit einlaufende Wassermenge derart dosiert, daß insgesamt eine Aufgußzeit von 3 bis 5 Minuten erreicht wird. D. h., innerhalb dieser Aufgußzeit ist das gesamte Wasservolumen durch den erfindungsgemäßen Filter hindurchgelaufen. Weiterhin ist das erfindungsgemäße Behältnis derart dimensioniert, daß die im Behältnis aufgestaute Wassermenge mindestens dem im Behältnis enthaltenen Raumvolumen der Teeblätter 13 entspricht, so daß diese vom Wasser vollständig abgedeckt werden (wie in Fig. 3 angedeutet).

Durch die vorliegende Erfindung wird ermöglicht, portioniert abgepackte Teeblätter portioniert aufzugießen und somit Teeportionen einer bestimmten Menge zu erzeugen, die sich durch ein ausgezeichnetes Aroma und eine hohe Ausbeute der Teeblätter bei einer gleichbleibenden Qualität auszeichnen.

## Ansprüche

1. Verfahren zum Aufbrühen von Tee aus Teeblättern oder dergleichen, wobei kochendheißes Wasser auf die in einem Aufgußfilter eingefüllten Teeblätter gegossen wird und das hineingegossene Wasser aus dem Aufgußfilter unter Durchfluß durch die Teeblätter ausläuft und aufgefangen wird, **dadurch gekennzeichnet,** daß eine genau dosierte Wassermenge entsprechend mindestens dem Volumen einer Teetasse in den Aufgußfilter mit einem konstanten Dosiervolumen eingegossen wird und während der anfänglichen Einlaufphase zunächst das Wasser im Filter solange aufgestaut wird, indem das Wasserzulaufvolumen pro Zeiteinheit größer ist als das Wasserablaufvolumen pro Zeiteinheit, bis das Wasser eine derartige statische Höhe erreicht hat, daß das Wasserzulaufvolumen pro Zeiteinheit gleich dem Wasserablaufvolumen pro Zeiteinheit ist, sowie das Wasserzulaufvolumen pro Zeiteinheit und das Wasserablaufvolumen pro Zeiteinheit derart gewählt sind, daß eine gesamte Aufgußzeit von 3 bis 5 Minuten erreicht wird.

2. Verfahren nach Anspruch 1,
**dadurch gekennzeichnet,**
daß das im Filterbehältnis gestaute Wasservolumen mindestens gleich dem im Filterbehältnis enthaltenen Raumvolumen der portionsweise abgepackten Teeblätter ist.

3. Teefilter, insbesondere zum Durchführen des Verfahrens nach Anspruch 1 oder 2,
**gekennzeichnet durch**
ein aus Kunststoff bestehendes, becherförmiges Tiefziehteil (1), in dessen Boden mindestens eine mittige Auslauföffnung (4) ausgebildet ist, deren Größe derart bemessen ist, daß in Abhängigkeit von dem höchsten Füllstand im Behältnis und der einfließenden, dosierten Wassermenge eine Aufgußzeit von 3 bis 5 Minuten gegeben ist.

4. Teefilter nach Anspruch 3,
**dadurch gekennzeichnet**
daß der Boden schalenförmig ist und die Auslauföffnung (4) in einer kreisförmigen Bodenvertiefung (8) angeordnet ist .

5. Teefilter nach Anspruch 3 oder 4,
**dadurch gekennzeichnet,**
daß im Bodenbereich radialstrahlenförmig von der Auslauföffnung (4) weg verlaufende Rinnen (7) ausgebildet sind, die zur Behältnisinnenseite offen sind.

6. Teefilter nach Anspruch 3 oder 4,
**dadurch gekennzeichnet,**
daß die Einlauföffnung (2) von einem äußeren Rand (3) umfaßt wird, der etwa senkrecht zur Behältnisachse X-X verläuft.

7. Teefilter nach einem oder mehreren der Ansprüche 3 bis 6, **dadurch gekennzeichnet,**
daß in der Behältniswandung (6) oberhalb des maximalen Füllstandes mindestens eine Überlauföffnung (10) ausgebildet ist.

8. Teefilter nach Anspruch 7,
**dadurch gekennzeichnet,**
daß die Überlauföffnung (10) in einer zur Ebene der Einlauföffnung (2) parallelen Ebene liegt und in eine in der Außenseite der Behältniswandung (6) ausgebildeten, zur Außenseite hin offenen, rinnenartigen Einbuchtung (12) mündet.

9. Teefilter nach einem oder mehreren der Ansprüche 2 bis 8, **dadurch gekennzeichnet,**
daß die Auslauföffnung (4) in einer konzentrischen Vertiefung (8) angeordnet ist.

10. Teefilter nach Anspruch 9,
**dadurch gekennzeichnet,**
daß vom Rand der Vertiefung (8) aus radial in Richtung auf den Rand (3) verlaufende, nach der Behältnisinnenseite offene Rinnen (9) in der Wandung (6) ausgebildet sind.

II

FIG.1

5030

FIG.2

FIG.3

| | Europäisches Patentamt | EUROPÄISCHER RECHERCHENBERICHT | Nummer der Anmeldung |
|---|---|---|---|

EP 88 10 4315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 829 775 (KAMSTRUP-LARSEN) * Seite 2, Zeilen 1-24; Seite 3, Zeilen 15-26; Seite 4, Zeilen 1-24; Figur 1 * | 1,2 | A 47 J 31/06 A 47 J 31/02 |
| Y | | 3,4,5,9 | |
| Y | FR-A-2 231 341 (DONOT) * Insgesamt * | 3 | |
| Y | FR-A-2 384 474 (PLASTON AG KUNSTSTOFFWERKE) * Seite 2, Zeilen 28-37; Figuren 1,2 * | 4,5,9 | |
| A | EP-A-0 253 246 (WOLTERMANN) * Spalte 2, Zeile 46 - Spalte 3, Zeile 45; Figur 1 * | 2,3,5,6 ,10 | |
| A | DE-B-2 645 885 (MELITA WERKE BENTZ & SOHN) * Anspruch 1; Figur 1 * | 7 | |
| A | CH-A- 473 569 (CORY CORP.) * Spalte 3, Zeile 51 - Spalte 5, Zeile 53; Anspruch 1; Figuren 1,2 * | 1 | RECHERCHIERTE SACHGEBIETE (Int. Cl.4) A 47 J |

Der vorliegende Recherchenbericht wurde für alle Patentansprüche erstellt

| Recherchenort | Abschlußdatum der Recherche | Prüfer |
|---|---|---|
| DEN HAAG | 17-11-1988 | MEINDERS H. |